# EUROPEAN PATENT SPECIFICATION

(11) **EP 4 000 385 B1**
(45) Date of publication and mention of the grant of the patent: **01.01.2025**
(21) Application number: 20209352.2
(22) Date of filing: 23.11.2020
(51) Int. Cl.: A01G 27/00, A01G 31/02, A01G 27/02

(54) **A WATER LEVEL MONITORING SYSTEM**
WASSERSTANDÜBERWACHUNGSSYSTEM
SYSTÈME DE SURVEILLANCE DE NIVEAU D'EAU

(43) Date of publication of application: 25.05.2022
(73) Proprietor: Bensch, Jonas, 3000 Leuven (BE); Van Aken, Thomas, 9180 Moerbeke (BE); Decuyper, Xavier, 9800 Deinze (BE)
(72) Inventor: Bensch, Jonas, 3000 Leuven (BE); Van Aken, Thomas, 9180 Moerbeke (BE); Decuyper, Xavier, 9800 Deinze (BE)
(74) Representative: Brantsandpatents bv

(56) References cited:
- DE-A1- 3 438 078
- US-A1- 2019 208 711
- US-A1- 2020 236 878
- US-A1- 2020 344 965

## Description

### Field of the Invention

The present invention generally relates to a water level monitoring system for monitoring a water level in a hydroponic system, such as a LECA system (being a "lightweight expanded clay aggregate" system) or any other semi-hydroponic system or passive hydroponic system. The invention further relates to a corresponding method to monitor the water level in a hydroponic system, like for instance a LECA system or any other semi-hydroponic system or passive hydroponic system.

### Background of the Invention

Hydroponic systems nowadays become more and more popular in the cultivation of plants. A hydroponic system may be a water- or hydroculture system such as a deep water culture or a nutrient film hydroponic system. But the interest in hydroponic systems being LECA systems, or any other semi-hydroponic systems or passive hydroponic systems, grew in private use. The hydroponic system being a LECA system, or any other semi-hydroponic systems or passive hydroponic systems became also very popular for use in larger areas, like office spaces, shopping malls, airports, lobbies of hotels and alike.

In LECA systems, and any other semi-hydroponic systems or passive hydroponic systems, the hydroponic plant cultivation relies on the use of porous, water-absorbing substrate in which the roots of plants grow. This technique is in contrast to regular plant cultivation, wherein soil is used in contact with the plants' roots, or hydroculture wherein the plants grow with their roots in water. In hydroculture, the presence of water during so-called wet periods, and the non-presence of water during so-called dry periods in time is crucial.

One of the most important aspects in LECA systems, as well as in any other semi-hydroponic systems or passive hydroponic systems, is the timely adding of water to plants in order to maximize their lifetime and appearance.

Typically, there is a water retention volume under the absorbing material or at the bottom of the water-absorbing material. The water level is made visible by a plastic tube in which a floating device (e.g. a plastic ball pushing a long plastic pin or rod) moves upwards due to the Archimedes forces acting on the ball. The level of the ball is made visible by the end of the pin or rod which indicates in a transparent tube the height of the water in reference to a minimum and maximum level indicated on the tube.

Monitoring the water level is done visually and requires for instance daily human inspection. The plant needs to be provided with fresh water to generate a wet period, after e.g. 4 days to 8 days (depending on the plant variety) of a dry period. The length of wet and dry periods is dependent on the type of plants and the season, and hence may vary over time and between different hydroponic systems.

Often the person monitoring the water level of plants forgets to fill or fills too early. In particular in office spaces, hotels, airports and alike where a large number of plants of different varieties have to be monitored, the lifetime and appearance of plants reduces substantially as a result of inappropriate water filling based on human inspection of the water filling level. The relevant prior art discloses following water level monitoring systems: US 2020/344965 A1, US 2020/236878 A1, DE 34 38 078 A1 and US 2019/208711 A1.

There is a need for an improved system to monitor the water level in a hydroponic system in general.

### Summary of the Invention

The above objective is accomplished by a water level monitoring system according to claim 1.

According to a first aspect of the invention, a water level monitoring system for monitoring a water level in a hydroponic system is provided. The water level monitoring system comprises:
- a monitoring means for monitoring the position of a floating means floating on the water level in a hydroponic system and generating a monitoring result;
- a processor configured to process said monitoring result and determine therefrom a water level for the hydroponic system; and
- an alerting unit configured to generate an alert signal based on said water level.

The water level monitoring system may be adapted for monitoring a water level in any hydroponic system, though preferably is adapted for monitoring a water level in a LECA system or any other semi-hydroponic system or a passive hydroponic system.

The water level monitoring system according to the present invention is an improved system to monitor the water level in a hydroponic system. The water level monitoring system according to the present invention makes a combination of monitoring the position of the floating means, processing the position and generating an alert for the user, while this water level monitoring system does not require any human intervention. The system is independent of the discipline and accuracy of a user, and hence is more reliable. Human inspection often may lack regularity and/or accuracy. Human inspection on the spot is no longer needed when using a water level monitoring system according to the present invention.

The water level monitoring system can also take into consideration the diverse plants and/or plant variations present in the monitored system and may take into account the different needs of such diverse plants and/or plant variations. This diversity, in particular when different plants and/or plant variations are to be monitored by the same person, is often too complex for human monitoring and intervention to be done accurately based upon human inspection only. When not combined into a single hydroponic system, different varieties of plants in different hydroponic systems may require different water filling times, which is also difficult to manage by a human.

The monitoring means for monitoring the position of a floating means is an optical system. Optical systems require the least interaction with the hydroponic system, while a reliable monitoring result can be obtained.

As an example, the monitoring means may comprise a series of light gates, such as IR-light gates, which are positioned along the position range where the floating means may be present. The series of lights hence are positioned all along the length defined by the two extrema being the position when the hydroponic system is in fully filled or overfilled condition, and the empty condition. The monitoring result may be a series of on or off signals of the series of light gates. A processor may process this result and may determine what the water level is in the hydroponic system. As another example, the monitoring means may comprise a reflectance monitoring means. A plurality of light sources, e.g. IR -light sources, with adjacent light detectors or sensors are positioned along the position range where the floating means may be present. The IR -light sources, with adjacent light detectors or sensors, hence are positioned all along the length defined by the two extrema being the position when the hydroponic system is in fully filled or overfilled condition, and the position when the hydroponic system is in empty condition. The light sources emit light, which is reflected by the floating means and detected by accompanying the light detector if the floating means is present in front of the light source. The reflected light is less or not detected by the light receptor ifs the floating means is not in front of the light source. The monitoring result may be a series of on or off signals of the light detectors. A processor may process this result and may determine what the water level is in the hydroponic system based upon this monitoring result. In a further example, the monitoring means comprises a time-of-flight camera, possibly a one-pixel time-of-flight camera, measuring the distance between the floating means and the camera. The monitoring result may be the distance between the floating means and the camera. A processor may process this result and may determine what the water level is in the hydroponic system based on this monitoring result.

According to some embodiments, the monitoring means comprises a camera configured to make an image of the position of the floating means, the image corresponding to said monitoring result.

The use of a camera as an optical system is according to the invention. Cameras may have quite small dimensions. Such small cameras are readily available even at low cost nowadays. Their smaller dimensions allow integration of the cameras in a relatively small monitoring system. Seen the cameras relatively small dimensions, the use of cameras allows the whole water level monitoring system to be relatively small. As such, a water level monitoring system may be provided which does not disturb the overall appearance of a hydroponic system and/or provide no obstruction for the plants of the hydroponic system. The images which are generated by cameras can be accurately processed. Numerous interpretation algorithms for images comprising a matrix of pixels are readily available. Thus, processing the image and determining therefrom a water level for the hydroponic system may not be the only information resulting from the image being processed. The image can also be used to generate information on e.g. the overall condition of the floating means, such as misalignment of the measuring means in general and the optical system in particular, defects in the optical system of the measuring means itself and alike.

According to some embodiments, the camera may be an infrared camera. Infrared or IR-cameras may be used to monitor the floating means during daytime as well as during night-time. Infrared cameras are not dependent on the presence of visible light, such as daylight, to generate a suitable image. IR cameras make a thermal image of the floating means, using waves in the IR radiation spectrum and emitted or reflected by the object of which an image is taken. In regions where the presence of daylight may vary largely dependent on the season, such IR cameras have the advantage that the monitoring can be scheduled at given time moments during the day, independent of the amount of daylight typically present at those time moments in that season.

The use of a camera as optical system has the advantage that the presently used floating means may still be used. The water level monitoring system according to the invention may make use of the floating means as presently available for hydroponic systems and has no influence on the performance of these floating means. As such the floating means as presently used (hereafter the analog system) still provide a fallback system in case the water level monitoring system according to the invention fails, e.g. due to low battery tension or damage. Another advantage is that during filling of the hydroponic system, the person filling the hydroponic system can still rely on the analog system to see to what extent water further needs to be added.

A processor may process this monitoring result being an image and determine what the water level is in the hydroponic system. The processor may use digital signal processing (DSP) algorithms for this processing and/or determination or may use artificial intelligence (AI) and machine learning (ML) for this processing and/or determination.

The monitoring means may constantly monitor the position of the floating means. In the alternative, the monitoring means may comprise a timing means to schedule monitoring moments periodically, at regular time intervals. As an example, regular time intervals between 15 minutes and 6 hours may be used, e.g. every hour, every two hours or every three hours. The monitoring may be interrupted during the night-time. In case monitoring during the night-time continues, preferably an IR-light monitoring means is used, such as an IR-camera.

According to some embodiments, the processor may be configured with a digital signal processing algorithm to process the monitoring result and determine the water level. In possible implementations, the image may be converted into a water level signal by one or more DSP (Digital Signal Processing) algorithm executed by the processor, e.g. comprising:
- contour detection and/or;
- colour separation.

According to some embodiments, the processor is configured with artificial intelligence and machine learning to process the monitoring result and determine the water level.

In some possible implementations, the image may be converted into a water level by artificial intelligence. A neural network trained with images taken by cameras and labeled with corresponding water levels (for instance by humans), and running on the remote or on-board processor, determines the water level for each new picture taken. A neural network in the cloud may be trained with new pictures. An on-board neural network may rather be altered during software updates.

Using artificial intelligence (AI) and machine learning (ML) has the advantage that measuring results, like images, taken under very different circumstances may be used to convert this measuring result in a water level of the hydroponic system. In particular when the monitoring result is an image, the AI/ML may convert images taken by different cameras and under different light circumstances to an appropriate water level of the hydroponic system.

Possibly more than one artificial intelligence and machine learning unit may form part of the system. This may for instance be the case when the monitoring means to provide an image as a monitoring result, e.g. when the monitoring means comprises a camera, such as an IR-camera. In some embodiments, in a first step, a first artificial intelligence and machine learning unit may convert the image taken into a position of the floating means, whereas a second artificial intelligence and machine learning unit may determine a water level based upon this position of the floating means. In other embodiments, in a first step, a first artificial intelligence and machine learning unit may convert the image taken into a position of the floating means, whereas a static algorithm may determine a water level based upon this position of the floating means.

According to some embodiments, the processor may be an on-board processor integrated with the monitoring means into a single unit.

The use of an on-board processor has the advantage that no internet connection is needed to operate the water level monitoring system. The system may indicate that water is to be added, or at least to be considered, by alerting the user through an alert signal like an auditive and/or visual signal generated by an alert unit on-board.

The signal may be a local signal, i.e. noticeable at or near the hardware of the water level monitoring system. It may e.g. be a visible signal, e.g. a LED-light or similar means being lightened or flashing, which LED-light is present on the hardware of the water level monitoring system. Additionally, or alternatively, the signal may be e.g. an auditive signal, e.g. a beeping signal, being generated by a sound generating means on-board of the hardware of the water level monitoring system.

Additionally or alternatively, the alert unit may generate a signal which is communicated to a second device, e.g. a smart device like a smart speaker, smartphone, smartwatch, a tablet and alike. This smart device on its turn will provide the user with a signal, like a message or alike. The alert unit and the smart device may communicate through a close proximity communication system, like Bluetooth or other short distance point-to-point technology. Obviously, when combined with internet connectivity, the on-board processor and alerting unit may use alternative ways to communicate the alert signal to the user, using for instance WIFI, 4G, 5G or narrow band IoT wireless networks. The alert signal may be communicated to a software platform bundling a plurality of monitoring means, which thereafter communicates the alert signal to the end-user.

Using an on-board processor, the DSP algorithms and/or the AI/ML may be stored and performed on-board and may optionally be updated on a regular basis via updates. The updates may be obtained from a cloud storage system over the internet, using for instance WIFI, 4G, 5G or narrowband IoT wireless networks.

According to some embodiments, the processor may be a remote processor whereto the monitoring result is transferred via a communication network. DSP algorithms and/or AI/ML may be performed by an external or remote processor. These external DSP algorithms and/or external AI/ML can get updated on a regular basis while being stored in a cloud storage system. The monitoring result may be sent to the cloud storage system over the internet, using for instance WIFI or narrowband IoT wireless networks. Again, the alert unit generates an alert signal, which is communicated to a second device, e.g. a smart device like a smart speaker, smartphone, smartwatch, a tablet and alike, using for instance WIFI, 4G, 5G or narrowband IoT wireless networks. This smart device on its turn will provide the user with a signal, like a message or alike. The alert signal may as well be communicated to a software platform bundling a plurality of monitoring means, which thereafter communicates the alert signal to the end-user. Additionally, the alert unit may be communicated back to the hardware of the water level monitoring system, where a local signal, like a visual or auditive signal, may be generated.

According to some embodiments, the alerting unit may comprise communication means to communicate the alert signal to a smart device of a user, configured with an application to alert the user based on the alert signal.

In case a user is to monitor more than one water level monitoring system for more than one hydroponic system, signals of more than one water level monitoring system may be combined in one alert signal provided to the smart device of a user.

The user may thus obtain an alert or a signal, which alert or signal reflects the status of the hydroponic system or systems he or she is to monitor. The user may be instructed to provide water to one or more hydroponic systems, and not to provide water to other systems. A timely water provision may be obtained for one or more hydroponic systems, resulting in a longer lifetime for the plants grown in the hydroponic systems.

According to some embodiments, the alert signal may be a visual and/or an auditive signal.

According to some embodiments, the alerting unit may comprise communication means to generate a visual and/or auditive signal at the water level monitoring system itself. The visual signal may be a light signal, e.g. a flashing light signal. This system may be useful to locate the hydroponic system to be watered or inspected.

According to some embodiments, the alerting unit may comprise communication means to generate a signal and communicate such signal to a smart device, e.g. using an appropriate software application to generate an auditive or visual signal. As an example, an auditive signal may be provided by the smart device, the smart device may vibrate, a pop-up message may be generated indicating which monitored system or systems need to be inspected and provided with water, or an indication light, like a LED-light may be switched on or may flash. In the alternative, a dedicated device (e.g. being in the form of a keyholder or alike) may receive the signal and alert the user through for instance a light signal, a message, a vibration signal, an auditive signal or alike. Optionally an e-mail or text message may be generated and sent to an e-mail address of the user.

According to some embodiments, the water level monitoring means may comprise a holding means holding the monitoring means. The holding means may be adapted to be securely attached to a tube of a floating means of a hydroponic system. Such holding means may be used to retrofit existing hydroponic systems being equipped with a suitable floating means and provide the existing hydroponic system with a water level monitoring system.

According to the invention, the water level monitoring means comprises a floating means, said water level monitoring system being adapted to monitor the position of said floating means floating on the water level in the hydroponic system. The floating means and the monitoring means may be designed to cooperate, which may increase the level of accuracy of the monitoring means and the water level monitoring system.

According to some embodiments, the floating means may comprise at least a tube, the tube being transparent over at least a part of its length along its axis, the floating means comprising an indication means present along a part of the transparent part of the tube.

Such floating means are usually not complex and relatively cheap. They are part of existing technology. The use of such floating means has the advantage that existing floating means from existing hydroponic systems may be used in the provision of a water level monitoring system according to the invention. Possibly existing floating means, comprising a transparent tube in which an indication means is provided, may be monitored by the monitoring means of the invention. In other words, water level monitoring systems according to the invention may be used to upgrade the existing hydroponic system. The transparent tube has the advantage that it can be used in combination with a camera as monitoring means and possibly known image technology, without the need of making complex adaptations to the floating means and/or the hydroponic system in place.

According to some embodiments, the water level monitoring system may be adapted to monitor the position of this indication means. As an example, the floating means may comprise a floating ball, which ball is touching and lifting an indication rod within a tube, typically a polymeric and transparent tube. The water level monitoring system may be adapted to monitor the position of the top of the indication rod within the tube. These floating means are well known and used in the art. The water level monitoring system may be adapted to monitor the floating means of existing hydroponic systems. Monitoring the top of the indication rod in fact is what humans are to do when monitoring the water level of the hydroponic system. Hence the starting point for the water level monitoring system according to the invention is identical to the starting point for human monitoring.

The water level monitoring system may also gather additional data such as temperature, humidity, light intensity and light duration and/or additional information on the condition of the water level monitoring system like remaining battery power and alike. This additional data may also be communicated to the user.

According to a second aspect of the invention, a hydroponic system is provided. The hydroponic system comprises a water level monitoring system according to the first aspect of the invention.

A hydroponic system comprises in general a water retention volume in which one or more plants are provided. The roots of the plants are either directly in contact with the water in the water retention volume (i.e. hydroculture like deep water culture system or a nutrient film hydroponic system) or the roots are growing in a porous, water-absorbing substrate, this substrate being in contact with water in the water retention volume (i.e. a LECA systems, semi-hydroponic systems or a passive hydroponic system).

According to a third aspect of the invention, the use of a water level monitoring system according to the first aspect of the invention for monitoring a water level in a hydroponic system is provided, the use comprising the steps of
- monitoring the position of the floating means and generating a monitoring result;
- processing said monitoring result and determining therefrom a water level for the hydroponic system; and
- generating an alert signal based on said water level.

The independent and dependent claims set out particular and preferred features of the invention. Features from the dependent claims may be combined with features of the independent or other dependent claims, and/or with features set out in the description above and/or hereinafter as appropriate.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Figure 1 is a schematic view of a hydroponic system known in prior art.
Figures 2a and 2b are schematic views of a monitoring means being part of a water level monitoring system of a hydroponic system according to the invention.
Figures 3a and 3b are schematic views of a hydroponic system according to the invention comprising the monitoring means of figures 2a and 2b.
Figure 4 is a schematic isometric view of the monitoring means shown in figure 2a and 2b.
Figure 5a is a schematic exploded view of the components of the monitoring means shown in figures 2a and 2b. Figure 5b is a schematic view of the backside of the printed circuit board part of the monitoring means shown in figures 2a and 2b.
Figures 6a and 6b show schematically how the monitoring means of figures 2a and 2b can slide over a floating means, which may optionally be a floating means according to the prior art.
Figure 7 shows schematically the working of a water level monitoring system according to the invention
Figures 8a, 8b, 8c and 8d show schematically an alternative monitoring means being part of a water level monitoring system of a hydroponic system which is not according to the invention.
Figures 9a and 9b show schematically another alternative monitoring means being part of a water level monitoring system of a hydroponic system which is not according to the invention.
Figures 10a, 10b, 10c and 10d show schematically an alternative monitoring means being part of a water level monitoring system of a hydroponic system according to the invention.

The same reference signs refer to the same, similar or analogous elements in the different figures.

### Description of illustrative embodiments

The present invention will be described with respect to particular embodiments. It is to be noticed that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could.

Furthermore, the particular features or characteristics may be combined in any suitable manner in one or more embodiments, as would be apparent to one of ordinary skill in the art.

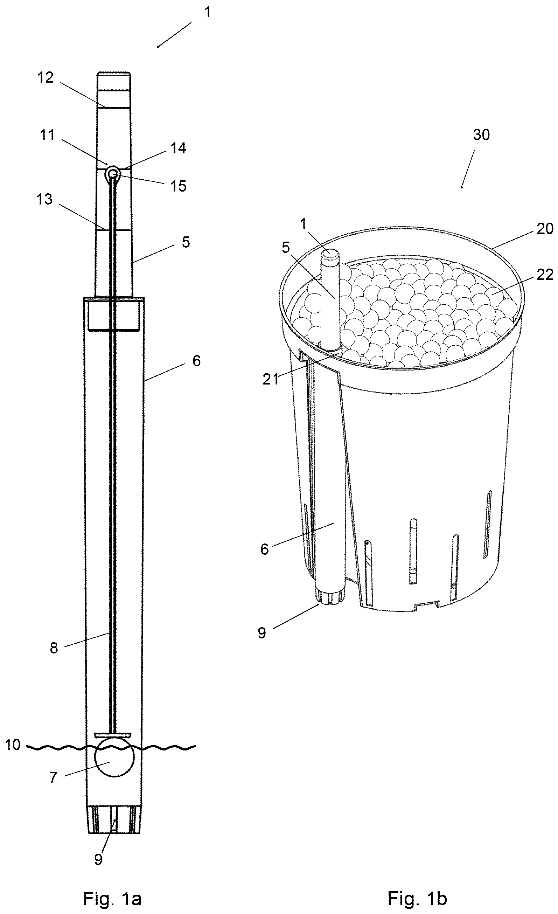

A water level monitoring system 1 as known in prior art, being part of e.g. a hydroponic system, such as a LECA system 30, is shown in figures 1a and 1b. Figure 1a shows the water level monitoring system 1, figure 1b shows a LECA type hydroponic system 30 in which the water level monitoring system 1 is provided. For clarity of the figure 1b, the plant and the outer casing of the hydroponic system is not shown. The hydroponic system 30, next to the not shown outer casing, comprises an inner pot 20, which has a position holder 21 where the water level monitoring system 1 can slide in from the bottom. The inner pot 20 is filled with expanded clay particles 22. The lower part of the water level monitoring system 1 is slid in the holder 21 until the interface between an upper tube part 5 and a lower tube part 6 reaches the holder. The holder prevents the combination of upper and lower tube part to slide further upwards. In mounted condition, the lower side of the water level monitoring system 1 extends in the water reservoir of the outer pot and is flush with the bottom of the pot 21. The water level monitoring system 1 is in fluid connection with the water reservoir of the outer pot of the hydroponic system and forms communicating vessels with this water reservoir. The lower side of the water level monitoring system 1 is coplanar with the lower side of the inner pot 20.

The water level monitoring system 1 comprises a floating means. The floating means comprises a tube, in this case the tube comprising an upper tube part 5 and a lower tube part 6. The upper tube part 5 is made of transparent polymer. The lower open end of the upper tube part 5 fits in the upper open end of the lower tube part 6. The lower tube part 6 may be provided from transparent polymer but may as well be made from non-transparent polymer. At the lower end of the lower tube part 6, openings 9 are provided which allow water to flow into the lower tube part 6. Via these openings 9, the lower tube part 6 is in fluid connection with the water reservoir of the hydroponic system. The more water in the water reservoir, the higher the water level in the lower tube part 6. The water reservoir of the hydroponic system and the tube work as communicating vessels. The actual water level in the hydroponic system 30 is indicated in figure 1a by the waterline 10. In the lower tube part 6, a polymeric ball 7 floats on the water which has entered the lower tube part 6. This ball 7 is contacted by a polymeric rod 8 at its upper side. The rod 8 extends into the upper tube part 5, where an indication means, being the top 11 of the rod 8, will be positioned between three marks present on the upper tube part 5, i.e. an upper mark 12 indicating the uppermost position of the top 11 of the rod 8 and a lower mark 13 indicating the lowermost position of the top 11 of the rod 8. An intermediate position 14 is indicated as well. When the minimum or no water is present in the lower tube part 6, the top 11 of the rod 8 will be at the height of the lower mark 13. When the water tank of the hydroponic system is fully filled, the top 11 of the rod 8 will be pushed up to the upper mark 12. The rod 8 is typically a slender element made from brightly coloured polymer. The colour of the rod 8 preferably is red. At the top 11 of the rod 8, the rod may have an enlargement 15. The middle of the enlargement 15 corresponds the water level in the lower tube part 6. The user sees the position of the enlargement through the translucent or transparent upper tube part 5.

The water level monitoring system 1 shown in figures 1a and 1b is known as the "analog system". Monitoring the water level using this water level monitoring system 1 is done visually and requires daily human inspection of the position of the top 11 of the rod 8 inside the tube. When the top 11 is at the lowest point for a given time, e.g. after 4 days, water need to be provided to the hydroponic system 30, thereby raising the top 11 of the rod 8 again until the rod 8 reaches its required position.

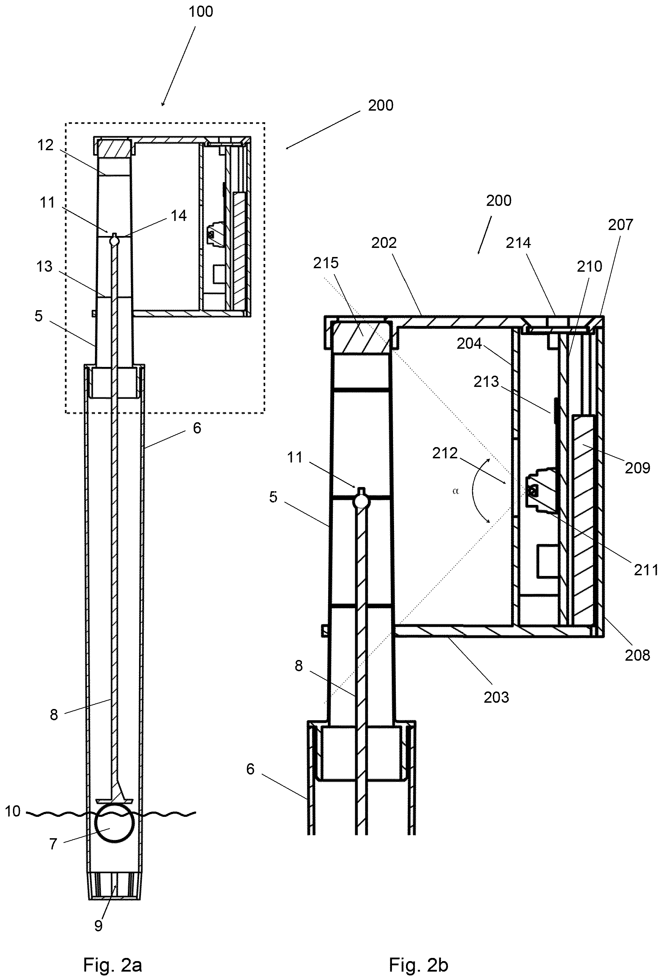

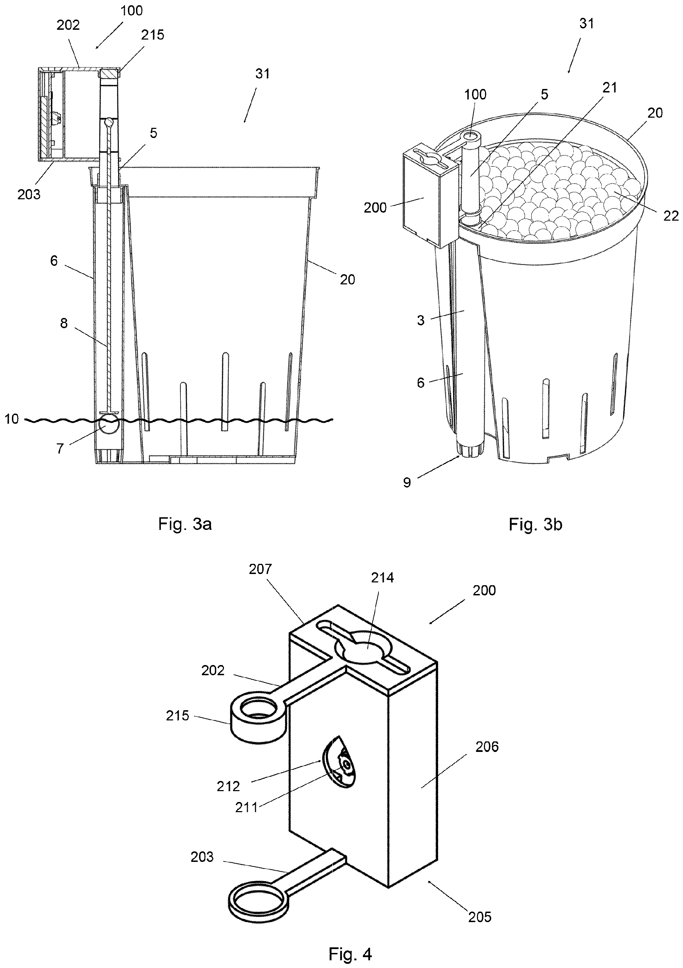

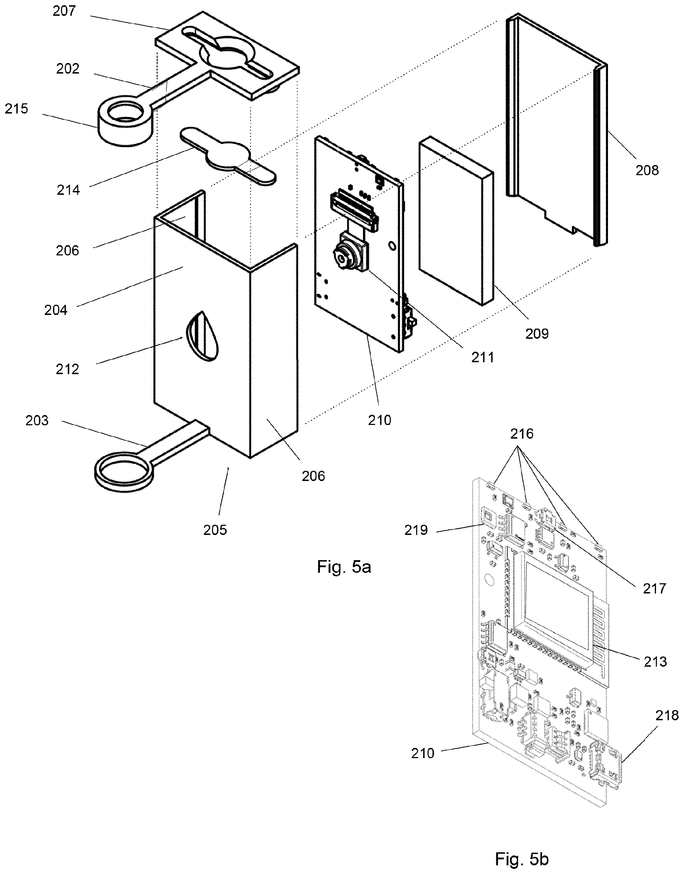

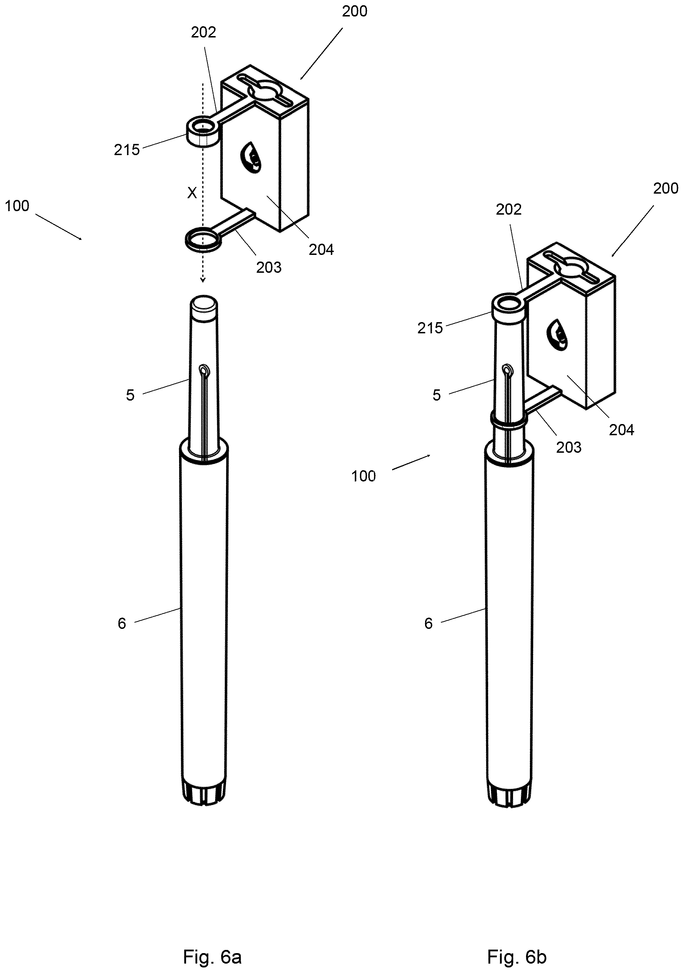

A water level monitoring systems according to the invention, being part of e.g. a hydroponic system according to the invention, such as a LECA systems 31, is shown in figures 2a, 2b, 3a, 3b, 4, 5a, 5b, 6a and 6b. A detail of a water level monitoring system 100 according to the invention, which detail is encompassed by the dashed rectangle in figure 2a, is shown in figure 2b. The water level monitoring system 100 according to the invention as part of a hydroponic system 31 according to the invention being shown in figure 3a and 3b. An isometric view of the monitoring means 200 of the water level monitoring system 100 is shown in figure 4, whereas an exploded view of the components of the monitoring means 200 is shown in figure 5a. Figure 5b shows the backside of the printed circuit board of the monitoring means 200. Figures 6a and 6b show how a monitoring means 200 being part of the water level monitoring system 100 can slide over a floating means, which may optionally be a floating means according to the prior art.

The water level monitoring system 100 comprises a floating means being similar if not identical to the floating system of figures 1a and 1b. Parts with identical references refer to an identical or similar element in the water level monitoring system 100 and accompanying floating means.

The water level monitoring system 100 comprises a monitoring means 200. This monitoring means 200 can be used on floating means known in the prior art. As shown in figures 6a and 6b, the monitoring means 200 fits on the upper tube part 5 by a holding means, the holding means being adapted to be securely attached to the tube of the floating means. The holding means comprises a top lever 202 and a lower lever 203. The lower lever 203 is provided with a ring which can slide over the upper tube part 5 of the floating means. The upper lever 202 is provided with a cap 215 which fits on the upper tube part 5 of the floating means. The cap 215 prevents the upper lever 202 from sliding beyond the top of the upper tube part 5. The cap 215 fixes the holding means, and hence the monitoring means 200 on the upper tube part 5. The lower lever 203 has at its outer end a ring which fits over the upper tube part 5 and will guarantee a distance between front plate 204 of the monitoring means and the upper tube part 5 to remain constant. The monitoring means 200 hence can slide in the axial direction X of the tube over the upper tube part 5 until the cap 215 fits the top of the upper tube part 5.

As shown in figures 2 to 6, the front plate 204 is part of a cover box 205 which further comprises two side walls 206, a top wall 207 and a back wall 208 and a bottom wall. Within this cover box 205, a battery 209 is located, as well as a printed circuit board 210. A printed circuit board is also referred to as a PCB The cover box's 205 elements may be provided from polymeric material.

On the board 210, a plurality of electronic elements are provided. A camera 211, e.g. an IR camera, may be provided on this board. The camera 211 is located in front of an opening 212 or window present in the front plate 204. The camera is able to make images of the top 11 of the rod 8. The rod 8 is located along the transparent upper tube part 5. The position of the camera 211 and the position of the opening 212 together define the angle of view α of the monitoring means 200. The camera 211 making an image of the top 11 of the rod 8, provides a monitoring result being the image made.

The PCB 210 further comprises a processor 213 which may be configured to process this monitoring result and determine therefrom a water level for the hydroponic system. The PCB 210 further comprises an alerting unit configured to generate an alert signal based on said water level, in this case a visual alert by means of switched-on or flashing LED light(s) 216. The PCB 210 further may comprise a transceiver, USB loading point 218 for the battery, a time keeping means, a light sensor, a temperature and humidity sensor 219, a power switch and alike.

The cover box may also be provided with additional tools, such as a button 217, and alike. As an example, the top wall is provided with an opening, closed by a closing element 214 made out of transparent or translucent polymer. Under the closing element 214, the LEDs 216 and a button 217 are provided. The button is used to force the water level monitoring system to make a measurement, i.e. to take an image and process this image in order to get information on the water level in the hydroponic system.

In this embodiment, the processor 213 to determine a water level for the hydroponic system is provided as an on-board processor. The processor 213 is configured to process the obtained image and determine therefrom a water level for the hydroponic system. This processing may be based upon one or more DSP algorithms executed by the processor 213. In the alternative, AI/ML is stored on-board and used by the processor 213 to determine from the image a water level for the hydroponic system.

An alerting unit configured to generate an alert signal based on said water level is located on the board as well. The board may comprise a transceiver, to send a signal to a smart device, through a close proximity communication system or through the internet.

This water level monitoring system 100 has the advantage that it may use the floating means of existing hydroponic systems. As shown in figures 6a and 6b, the monitoring means may be mounted on the existing floating means without any manipulation of the floating means itself. The water level monitoring system 100 will function without the need for internet communication thanks to the processor 213 on-board and may provide the user with a signal through a close proximity communication system.

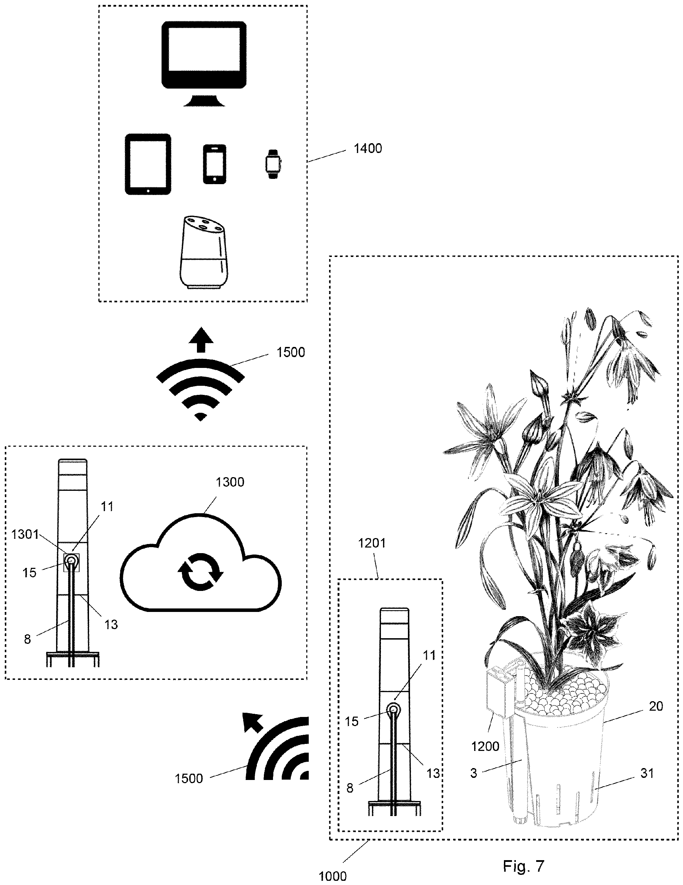

A water level monitoring system 1000, being an alternative for the water level monitoring systems with an on-board processor is shown in figure 7. The monitoring means 1200 is similar to the monitoring means 100 shown in figures 2 to 6, but the mere difference is that the monitoring means 1200 is provided with a transceiver to send the image taken to a processor located in the cloud 1300. The processor in the cloud is configured to process the received image, in this example using AI/ML, and determine therefrom a water level for the hydroponic system. An alerting unit configured to generate an alert signal based on said water level is located in the cloud as well. The alert unit sends a signal to one or more smart devices 1400, which signal is indicative for the water level of the hydroponic system, and optionally indicates actions to be taken. The communication between processor in the monitoring means and the processor in the cloud 1300, and between the alerting unit in the cloud and the smart devices 1400 may be done using communication techniques 1500 like WIFI, 4G, 5G or narrow band IoT wireless networks. The alert signal may be sent back to the monitoring means, which can trigger a local alert signal, like switching on or flashing a visual signal like a LED and/or switching on an auditive signal.

The processor, either on-board or in the cloud, and being configured with a digital signal processing algorithm to process the monitoring result and determine the water level, may use several consecutive steps to process the image into a monitoring result being a position of a floating means, and to process this result into a water level for the hydroponic system. As an example, the image taken may be filtered on colour. The rod has usually a typical colour, most often red. The image taken may be filtered on this typical colour, e.g. red, while all other colours are removed. Only the red colour of each pixel is kept. The filtered image may be scanned from top to bottom, with the intent to locate the uppermost pixel, or uppermost horizontal sequence of a given number of adjacent pixels, having a red colour with intensity above a given threshold. This uppermost pixel or uppermost sequence of pixels is indicative for the top of the rod in the image taken. The number of pixels between the upper edge of the image and this uppermost pixel, or uppermost sequence of pixels, may be used as monitoring result. As the position of the monitoring means is fixed vis a vis the floating means' tube, the minimum position and the maximum position of the rod is linked to a given minimum and maximum pixel number where the top may be noticed. The value of the number of pixels between the upper edge of the image and this uppermost pixel, or uppermost sequence of pixels can be compared to this minimum and maximum pixel number. A water level for the hydroponic system can be calculated based upon the differences between the number of pixels between the upper edge of the image and this uppermost pixel, or uppermost sequence of pixels, and the minimum and maximum pixel number.

An alternative digital signal processing algorithm to process the monitoring result and determine the water level may make use of the enlargement of the rod, usually a ring-like element, near the top of the rod. The opening of the ring-like element corresponds the water level in the lower tube part. As an example, first the colour separation step may be used, where the captured image is filtered on the typical colour of the rod, usually red. In a subsequent step, a contour detection is done, where the contours of the rod, and the enlargement, is made available. In a next step, the widest points of its enlargement will be determined, as well as the upper and lower point of the enlargement. These points, or pixels with given coordinates in the image, may be used to define a rectangle being the bounding box, each of these pixels being part of one of the sides of this rectangle. The bounding box is the smallest rectangle encompassing the enlargement of the outer end of the rod in the image taken. Calculating the centre of the rectangle will provide the pixel being the middle of the enlargement, which pixel is the measuring result. A water level for the hydroponic system can be calculated based upon the differences between the position of the centre pixel and the minimum and maximum pixel position for the centre of the enlargement.

In other embodiments, the processor, either on-board or in the cloud, is configured using AI/ML to process the monitoring result and determine the water level. The AI/ML algorithms may be build using the software from TensorFlow. As an example, and as shown in figure 7, the image 1201 taken by the camera is provided to the AI/ML algorithm, which processes the image into a position of the floating means. The AI/ML may determine, in the image taken 1201, the bounding box 1301 which is the smallest rectangle encompassing the enlargement 15 of the outer end 11 of the rod 8 in the image taken. The position of the floating means may be a pixel with given coordinate in the image taken, e.g. the upper pixel of the bounding box 1301 or the centre of the bounding box 1301. A water level for the hydroponic system can be calculated based upon the differences between the position of this pixel and the minimum and maximum pixel corresponding to the empty and fully filled hydroponic system, using DSP algorithms. Alternatively, the water level for the hydroponic system can be obtained from this position of the floating means using a second AI/ML algorithm.

Using these embodiments as shown in figures 2 to 7 have the advantage that the user gets a signal while this user does not need to inspect and follow up the water level of the monitored hydroponic systems on a regular basis. Additionally, the analog system still provides the user with an instant indication of the water level during refilling of the hydroponic system.

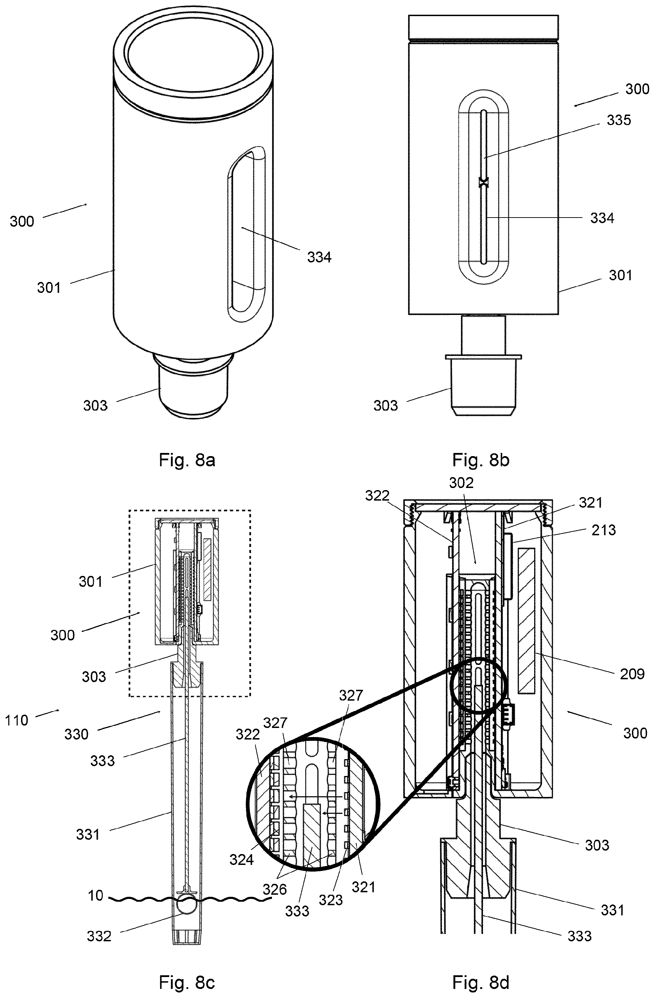

An alternative water level monitoring system 110 is shown in figures 8a to 8d, which is not according to the invention. An alternative monitoring means 300 for monitoring the position of a floating means being an optical system is used. The optical system used is a series of light gates, such as IR-light gates. Figure 8d is a detailed view of the measuring means 300 which is indicated in figure 8c by the dotted rectangle. The floating means 330 comprises a lower tube part 331 in which a polymeric ball is floating on the water level, referred to by reference 10. The lower tube part 331 and the polymeric ball 332 may be the lower tube part and the polymeric ball of a floating means existing in prior art as shown in figures 1a and 1b. Again, a rod 333 is floating on the polymeric ball 332. The rod 333 is a straight rod with a blunt upper end. Hence the monitoring means 300 may be used on parts of an existing floating means of prior art, where the upper tube part and the rod needs to be replaced by a rod 333 and a monitoring means 300.

The monitoring means 300 comprises a housing 301, preferably from untransparent polymer. The housing 301 encloses a light gate system 302. This housing 301 plugs on an upper side of a plug 303. The other, lower side of the plug 303 plugs onto the upper opening of the lower tube part 331. The light gates system 302 comprises a first and a second PCB 321 and 322 which both have a surface facing the other board. The surfaces are parallel to the axis of the rod 333. The first board 321 comprises a series of LEDs 323. In front of each LED, the second board 322 comprises a light detector 324. In front of the series of LEDs 323 and in front of the series of light detectors 324, two plates 325 and 326 is provided having a small opening 327 right in front of either a LED 323 or a light detector 324. The system is made light-tight.

The rod 333 slides through an opening in the plug, and in between the plates 325 and 326. A LED 323 emitting light will generate light received by the corresponding light detectors 324 when the rod does not extend between the openings 327 which correspond to this couple of LED 323 and light detector 324. When the rod is present between the openings 327 which correspond to this couple of LED 323 and light detector 324, the light emitted by the LED 323 will not generate a signal at the corresponding light detector 324. The LEDS 323 of the couples of LED 323 and light detector 324 are switched on and off one after the other. As such the position range of the rod 333 is scanned e.g. from top to bottom or bottom-up. As such, giving every couple of LED and light detector a serial number, counted from top to bottom and the upper couple having serial number 1, the first couple of LED and light detector which does not generate a signal in the light detector while light is emitted by the LED will indicate the position of the top of the rod 333. The serial number of this couple may be used as the monitoring result.

The monitoring means 300 may further comprise a window 334 having a transparent slot 335, in which the position of the rod 333 can be seen visually by the user. As such an analog system is provided to the end-user, allowing the end-user to visually monitor the position of the rod, hence the water level of the hydroponic system, which may be advantageous during refilling of the hydroponic system. The monitoring means 300 further comprises similar elements as the monitoring means of figures 2 to 6. The monitoring means 300 comprises a battery 209, a processor 213 and a transceiver. The monitoring means 300 may comprises the other elements as described for the monitoring means of figures 2 to 7.

Using the monitoring result as input for a processor configured to process this monitoring result and determine therefrom a water level for the hydroponic system, the water level for the hydroponic system can be determined. This may be done by a processor on-board or remote, and this may be done using DSP algorithms or AI/ML algorithms, similarly as set out for the embodiments set out in figures 2 to 7. In a similar way as set out for the embodiments shown in figures 2 to 7, an alerting unit may generate an alert signal and communicate this alert signal to the end-user.

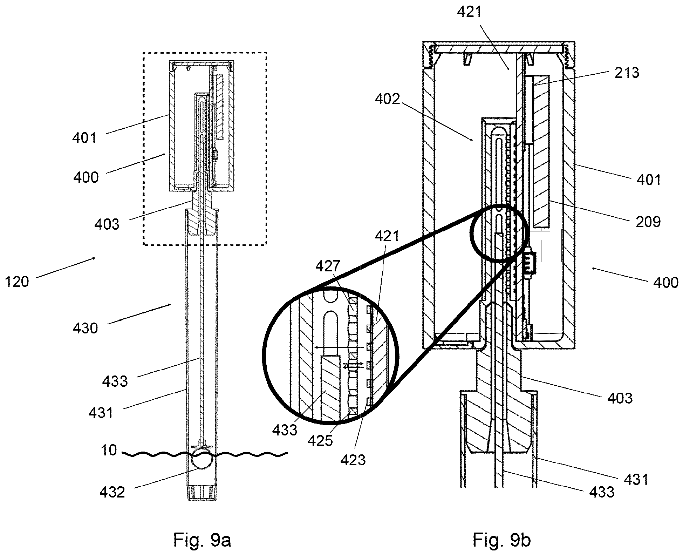

In figures 9a and 9b, an alternative monitoring means for monitoring means 400 is shown from an alternative water level monitoring system 120, which is not according to the invention. The monitoring means comprises a light reflection system 402 instead of a light gate system 402. All other elements are identical or similar to the monitoring means 400 of figures 8a to 8d. the monitoring means 400 comprises a housing 401 which is plugged on the top side of a plug 403. The lower side of this plug 403 may be plugged in the open side of a lower tube part 431, which itself is part of a floating means 430. This lower tube part 431 can be the lower tube part of a floating means known in prior art. The floating means further comprises a polymeric ball 432 (which can be the ball of a floating means known in prior art), this ball being contacted by a rod 433 on the balls' upper side. The rod 433 slides through a hole in the plug 403 into the housing 401 of the monitoring means 400.

The housing 401 is preferably provided from untransparent polymer. The housing 401 encloses a light-reflecting system 402. The light-reflecting system 402 comprises one PCB 421 having a surface parallel to the axis of the rod 433. The board 421 comprises a series of LEDs 423 and adjacent to each LED, a light detector (not shown in figures 9a and 9b). In front of the series of LEDs 423 and a plate 425 is provided having a small opening 427 right in front of the LED 423 and the light detector. The system is made light-tight.

The rod 433 slides through an opening in the plug, and in front of the plate 425. A LED 423 emitting light will generate light reflected by the rod, the reflected light being received by the corresponding light detectors when the rod extends in front of the openings 427 which correspond to this couple of LED and light detector. When the rod 433 is not present in front of the openings 427 which correspond to this couple of LED and light detector, the light emitted by the LED will not be reflected and will not generate a signal at the corresponding light detector. The LEDS 423 of the couples of LED 423 and light detector are switched on and off one after the other. As such the position range of the rod 433 is scanned e.g. from top to bottom or bottom-up. As such, giving every couple of LED and light detector a serial number, counted from top to bottom and the upper couple having serial number 1, the first couple of LED and light detector which does generate a signal in the light detector while light is emitted by the LED will indicate the position of the top of the rod 433. The serial number of this couple may be used as the monitoring result.

Similar to the monitoring means 300 as shown in figures 8a and 8b, the monitoring means 400 may further comprise a window having a transparent slot, in which the position of the rod can be seen visually by the user. As such an analog system is provided to the end-user, allowing the end-user to visually monitor the position of the rod, hence the water level of the hydroponic system, which may be advantageous during refilling of the hydroponic system. The monitoring means 400 further comprises similar elements as the monitoring means of figures 2 to 7. The monitoring means 400 comprises a battery 209, a processor 213 and a transceiver. The monitoring means 400 may comprises the other elements as described for the monitoring means of figures 2 to 6.

Using the monitoring result as input for a processor configured to process this monitoring result and determine therefrom a water level for the hydroponic system, the water level for the hydroponic system can be determined. This may be done by a processor on-board or remote, and this may be done using DSP algorithms or AI/ML algorithms, similarly as set out for the embodiments set out in figures 2 to 7. In a similar way as set out for the embodiments shown in figure 2 to 7, an alerting unit may generate an alert signal and communicate this alert signal to the end-user.

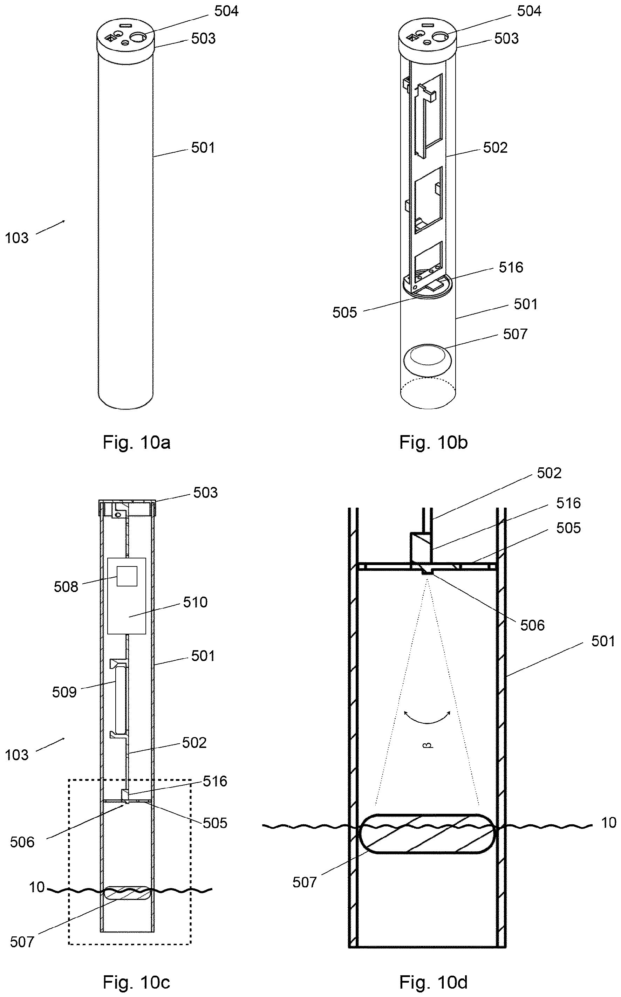

Still another alternative water level monitoring system 130 is shown in figures 10a to 10d. Figure 10d is the detail encompassed by the dotted rectangle in figure 10c. The monitoring means comprises a housing 501 in which a first board 502 is provided. The housing 501 has a tubular shape which is open at the bottom side, and which is meant to be positioned in a hydroponic system such that the water reservoir of the hydroponic system and the housing 501 work as communicating vessels. The top of the tubular shape is closed with a lid 503 in which openings for receiving LEDs, buttons and alike are provided. The first board 502 extends from the top of the tubular shape downwards in the housing 501. At the lower side of the board 502, a second board 505 is provided which has a substantial circular shape, and which is mounted perpendicular to the first board 502 while snugly fitting in the housing 501. The second board 505 is provided at its lower surface with a time of flight camera (ToF) 506 having a view angle β. This ToF 506 may be a one pixel ToF camera. The ToF PCB 516 is provided on the upper surface of the board 505. The length of the housing 501 and the position where the ToF 506 is positioned in side the housing 501 is chosen such that, once mounted in a hydroponic system, the water level of the hydroponic system cannot reach the ToF 506. Within the housing 501, on the water surface, a floating means being a cylindrical polymeric floater 507 is provided. The ToF 506 will measure the time it takes for light to travel from the ToF to the upper surface of the floater 507 and back. This time will be the monitoring result. This monitoring result will be provided to a processor 508 being mounted on the PCB 510. As set out for the water level monitoring systems of figures 2 to 7, in a similar way this monitoring result is processed and a water level for the hydroponic system is determined therefrom, either on-board or in the cloud, and by DSP or using AI/ML. Similarly as set out for the embodiments set out in figures 2 to 7, an alerting unit either on-board or in the cloud, is configured to generate an alert signal based on this water level obtained.

The monitoring means further comprises similar elements as the monitoring means of figures 2 to 7. The monitoring means comprises a battery 509, a processor 508 and a transceiver. The monitoring means may comprises the other elements as described for the monitoring means of figures 2 to 7.

It is to be understood that although preferred embodiments and/or materials have been discussed for providing embodiments according to the present invention, various modifications or changes may be made without departing from the scope of this invention.

## Claims

1. A water level monitoring system (100) for monitoring a water level in a hydroponic system, the water level monitoring system comprising:
• a monitoring means (200) for monitoring the position of a floating means floating on the water level in a hydroponic system and generating a monitoring result, wherein the monitoring means comprises the floating means, said monitoring means being adapted to monitor the position of said floating means, and wherein the monitoring means comprises a camera (211) configured tc make an image of the position of the floating means, said image corresponding to said monitoring result;
• a processor (213) configured to process said monitoring result and determine therefrom a water level for the hydroponic system; and
• an alerting unit configured to generate an alert signal based on said water level.

2. A water level monitoring system according to claim 1, wherein said camera (211) is an infrared camera.

3. A water level monitoring system according to one of the preceding claims, wherein said processor (213) is configured with a Digital Signal Processing algorithm to process said monitoring result and determine said water level.

4. A water level monitoring system according to one of the preceding claims, wherein said processor (213) is configured with artificial intelligence and machine learning to process said monitoring result and determine said water level.

5. A water level monitoring system according to one of the preceding claims, wherein said processor (213) is an on-board processor integrated with said monitoring means into a single unit.

6. A water level monitoring system according to one of the preceding claims, wherein said processor (213) is a remote processor whereto said monitoring result is transferred via a communication network.

7. A water level monitoring system according to one of the preceding claims, wherein said alerting unit comprises a communication means to communicate said alert signal to a smart device of a user, configured with an application to alert said user based on said alert signal.

8. A water level monitoring system according to one of the preceding claims wherein said alert signal is a visual and/or auditive signal.

9. A water level monitoring system according to one of the preceding claims, wherein the monitoring means comprises a holding means holding the monitoring means, the holding means being adapted to be securely attached to a tube of a floating means of a hydroponic system.

10. A water level monitoring system according to claim 1, wherein the floating means comprises at least a tube, the tube being transparent over at least a part of its length along its axis, the floating means comprising an indication means present along a part of the transparent part of the tube.

11. A water level monitoring system according to claim 10, wherein said water level monitoring system is adapted to monitor the position of said indication means.

12. A hydroponic system comprising a water level monitoring system (100) according to any one of the preceding claims.

13. The use of a water level monitoring system (100) according to any one of the claims 1 to 11 for monitoring a water level in a hydroponic system, the use comprising the steps of
• monitoring the position of the floating means and generating a monitoring result;
• processing said monitoring result and determining therefrom a water level for the hydroponic system; and
• generating an alert signal based on said water level.

## Patentansprüche

1. Ein Wasserstandüberwachungssystem (100) zum Überwachen eines Wasserstandes in einem Hydrokultursystem, wobei das Wasserstandsüberwachungssystem Folgendes umfasst:
• ein Überwachungsmittel (200) zum Überwachen der Position eines Schwimmmittels, das in einem Hydrokultursystem auf der Wasseroberfläche schwimmt, und zum Erzeugen eines Überwachungsergebnisses, wobei das Überwachungsmittel das Schwimmmittel umfasst, wobei das Überwachungsmittel dafür eingerichtet ist, die Position des Schwimmmittels zu überwachen, und wobei das Überwachungsmittel eine Kamera (211) umfasst, die dafür konfiguriert ist, ein Bild der Position des Schwimmmittels aufzunehmen, wobei das Bild dem Überwachungsergebnis entspricht,
• einen Prozessor (213), der dafür konfiguriert ist, das Überwachungsergebnis zu verarbeiten und daraus einen Wasserstand für das Hydrokultursystem zu bestimmen, und
• eine Alarmierungseinheit, die dafür konfiguriert ist, basierend auf dem Wasserstand ein Alarmsignal zu erzeugen.

2. Ein Wasserstandsüberwachungssystem nach Anspruch 1, wobei die Kamera (211) eine Infrarotkamera ist.

3. Ein Wasserstandsüberwachungssystem nach einem der vorhergehenden Ansprüche, wobei der Prozessor (213) mit einem Algorithmus zum Verarbeiten eines Digitalsignals konfiguriert ist, um das Überwachungsergebnis zu verarbeiten und den Wasserstand zu bestimmen.

4. Ein Wasserstandsüberwachungssystem nach einem der vorhergehenden Ansprüche, wobei der Prozessor (213) mit künstlicher Intelligenz und Maschinenlernen konfiguriert ist, um das Überwachungsergebnis zu verarbeiten und den Wasserstand zu bestimmen.

5. Ein Wasserstandsüberwachungssystem nach einem der vorhergehenden Ansprüche, wobei der Prozessor (213) ein interner Prozessor ist, der mit dem Überwachungsmittel zu einer einzelnen Einheit zusammengefasst ist.

6. Ein Wasserstandsüberwachungssystem nach einem der vorhergehenden Ansprüche, wobei der Prozessor (213) ein Fernprozessor ist, zu dem das Überwachungsergebnis über ein Kommunikationsnetz übertragen wird.

7. Ein Wasserstandsüberwachungssystem nach einem der vorhergehenden Ansprüche, wobei die Alarmierungseinheit ein Kommunikationsmittel zum Kommunizieren des Alarmsignals an ein smartes Gerät eines Benutzers umfasst, welches mit einer Anwendung konfiguriert ist, um den Benutzer basierend auf dem Alarmsignal zu alarmieren.

8. Ein Wasserstandsüberwachungssystem nach einem der vorhergehenden Ansprüche, wobei das Alarmierungssignal ein sichtbares und/oder ein hörbares Signal ist.

9. Ein Wasserstandsüberwachungssystem nach einem der vorhergehenden Ansprüche, wobei das Überwachungsmittel ein Haltemittel umfasst, welches das Überwachungsmittel hält, wobei das Haltemittel dafür eingerichtet ist, sicher an einem Rohr eines Schwimmmittels eines Hydrokultursystems angebracht zu sein.

10. Ein Wasserstandsüberwachungssystem nach Anspruch 1, wobei das Schwimmmittel mindestens ein Rohr umfasst, wobei das Rohr über mindestens einen Teil seiner Länge entlang seiner Achse transparent ist, wobei das Schwimmmittel ein Anzeigemittel umfasst, das entlang eines Teils des transparenten Teils des Rohres vorhanden ist.

11. Ein Wasserstandsüberwachungssystem nach Anspruch 10, wobei das Wasserstandsüberwachungssystem dafür eingerichtet ist, die Position des Anzeigemittels zu überwachen.

12. Ein Hydrokultursystem, ein Wasserstandsüberwachungssystem (100) nach einem der vorhergehenden Ansprüche umfassend.

13. Die Verwendung eines Wasserstandsüberwachungssystems (100) nach einem der Ansprüche 1 bis 11 zum Überwachen eines Wasserstandes in einem Hydrokultursystem, wobei die Verwendung die folgenden Schritte umfasst:
• Überwachen der Position des Schwimmmittels und Erzeugen eines Überwachungsergebnisses,
• Verarbeiten des Überwachungsergebnisses und Bestimmen eines Wasserstandes für das Hydrokultursystem daraus und
• Erzeugen eines Alarmsignals, basierend auf dem Wasserstand.

## Revendications

1. Un système de surveillance du niveau d'eau (100) pour surveiller un niveau d'eau dans un système hydroponique, le système de surveillance du niveau d'eau comprenant:
• un moyen de surveillance (200) pour surveiller la position d'un moyen flottant flottant au niveau de l'eau dans un système hydroponique et générer un résultat de surveillance, dans lequel le moyen de surveillance comprend le moyen flottant, ledit moyen de surveillance étant conçu pour surveiller la position dudit moyen flottant, et dans lequel le moyen de surveillance comprend une caméra (211) configurée pour créer une image de la position du moyen flottant, ladite image correspondant audit résultat de surveillance;
• un processeur (213) configuré pour traiter ledit résultat de surveillance et déterminer à partir de celui-ci un niveau d'eau pour le système hydroponique; et
• une unité d'alerte configurée pour générer un signal d'alerte sur la base dudit niveau d'eau.

2. Un système de surveillance du niveau d'eau selon la revendication 1, dans lequel ladite caméra (211) est une caméra infrarouge.

3. Un système de surveillance du niveau d'eau selon l'une des revendications précédentes, dans lequel ledit processeur (213) est configuré avec un algorithme de traitement de signal numérique pour traiter ledit résultat de surveillance et déterminer ledit niveau d'eau.

4. Un système de surveillance du niveau d'eau selon l'une des revendications précédentes, dans lequel ledit processeur (213) est configuré avec une intelligence artificielle et un apprentissage automatique pour traiter ledit résultat de surveillance et déterminer ledit niveau d'eau.

5. Un système de surveillance du niveau d'eau selon l'une des revendications précédentes, dans lequel ledit processeur (213) est un processeur embarqué intégré audit moyen de surveillance dans une unité unique.

6. Un système de surveillance du niveau d'eau selon l'une des revendications précédentes, dans lequel ledit processeur (213) est un processeur distant auquel ledit résultat de surveillance est transféré par l'intermédiaire d'un réseau de communication.

7. Un système de surveillance du niveau d'eau selon l'une des revendications précédentes, dans lequel ladite unité d'alerte comprend un moyen de communication pour communiquer ledit signal d'alerte à un dispositif intelligent d'un utilisateur, configuré avec une application pour alerter ledit utilisateur sur la base dudit signal d'alerte.

8. Un système de surveillance du niveau d'eau selon l'une des revendications précédentes, dans lequel ledit signal d'alerte est un signal visuel et/ou sonore.

9. Un système de surveillance du niveau d'eau selon l'une des revendications précédentes, dans lequel le moyen de surveillance comprend un moyen de maintien maintenant le moyen de surveillance, le moyen de maintien étant conçu pour être solidement fixé à un tube d'un moyen flottant d'un système hydroponique.

10. Un système de surveillance du niveau d'eau selon la revendication 1, dans lequel le moyen flottant comprend au moins un tube, le tube étant transparent sur au moins une partie de sa longueur le long de son axe, le moyen flottant comprenant un moyen d'indication présent le long d'une partie de la partie transparente du tube.

11. Un système de surveillance du niveau d'eau selon la revendication 10, dans lequel ledit système de surveillance du niveau d'eau est conçu pour surveiller la position dudit moyen d'indication.

12. Un système hydroponique comprenant un système de surveillance du niveau d'eau (100) selon l'une quelconque des revendications précédentes.

13. L'utilisation d'un système de surveillance du niveau d'eau (100) selon l'une quelconque des revendications 1 à 11 pour surveiller un niveau d'eau dans un système hydroponique, l'utilisation comprenant les étapes consistant à:
• surveiller la position du moyen flottant et générer un résultat de surveillance;
• traiter ledit résultat de surveillance et déterminer à partir de celui-ci un niveau d'eau pour le système hydroponique; et
• générer un signal d'alerte sur la base dudit niveau d'eau.
